# EUROPÄISCHE PATENTANMELDUNG

(11) **EP 1 574 840 A1**
(43) Veröffentlichungstag der Anmeldung: **14.09.2005**
(21) Anmeldenummer: 04005481.9
(22) Anmeldetag: 08.03.2004
(51) Int. Cl.: G01N 21/17

(54) **Photoakustischer Gassensor und Verfahren zu dessen Herstellung**

(71) Anmelder: Siemens Building Technologies AG, 8008 Zürich (CH)
(72) Erfinder: Pleisch, Rolf, 8604 Hegnau-Volketswil (CH); Steiner, Peter, 8645 Jona (CH)
(74) Vertreter: Berg, Peter

(57) **Zusammenfassung**

Ein Photoakustischer Gassensor enthält eine Mess- und eine Referenzzelle (1 bzw. 2), einen eine Lichtquelle (4) aufweisenden Strahler und eine Mikrofonanordnung für die Messung der Druckdifferenz zwischen Mess- und Referenzzelle (1 bzw. 2). Die Mikrofonanordnung und die Lichtquelle (4) sind auf einer Mikrofon- beziehungsweise Lampen-Leiterplatte (8 bzw. 10) gefertigt und zusammen mit der Mess- und der Referenzzelle (1 bzw. 2) auf einer gemeinsamen Modul-Leiterplatte (P) bestückt. Die Mikrofonanordnung enthält ein durch ein so genanntes Noise Cancelling Mikrofon der in Mobiltelefonen verwendeten Art gebildetes Differenzmikrofon (3).

Das Verfahren zur Herstellung des Photoakustischen Gassensors ist dadurch gekennzeichnet, dass die auf der Lampen-Leiterplatte (10) gefertigte Lichtquelle (4), die auf der Mikrofon-Leiterplatte (8) gefertigte Mikrofonanordnung sowie die Mess- und die Referenzzelle (1 bzw. 2) in einer Batchverarbeitung zu einem Messmodul (M) vormontiert werden, welches auf der Modul-Leiterplatte (P) bestückt wird.

## Beschreibung

Die vorliegende Erfindung betrifft einen photoakustischen Gassensor mit einer Mess- und einer Referenzzelle, einem Strahler und einer Mikrofonanordnung für die Messung der Druckdifferenz zwischen Mess- und Referenzzelle.

Photoakustische Gassensoren der eingangs genannten Art werden bisher so hergestellt, dass die Mikrofonanordnung und der Strahler auf einer Basisplatte montiert, anschliessend die Messzelle um diese Komponenten herum aufgebaut, und schliesslich die Referenzzelle hinzu gefügt wird. Die Abmessungen des auf diese Weise hergestellten Gassensors sind relativ gross, und der Gassensor hat einen relativ hohen Energieverbrauch. Ausserdem ist der Herstellungsprozess aufwändig, was sich im Preis des Sensors nieder schlägt.

Durch die Erfindung soll nun ein photoakustischer Gassensor der eingangs genannten Art angegeben werden, der sich durch geringe Abmessungen, einen geringen Energieverbrauch und tiefe Herstellkosten auszeichnet.

Diese Aufgabe wird erfindungsgemäss dadurch gelöst, dass die Mikrofonanordnung und der Strahler auf einer Mikrofon- beziehungsweise Strahler-Leiterplatte gefertigt und zusammen mit der Mess- und der Referenzzelle auf einer gemeinsamen Modul-Leiterplatte bestückt sind.

Der durch die Erfindung vorgeschlagene photoakustische Gassensor hat geringe Abmessungen und einen geringen Energieverbrauch. Durch die Fertigung der Mikrofonanordnung und des Strahlers auf einer Mikrofon- beziehungsweise Strahler-Leiterplatte lässt sich der Herstellungsprozess des Gassensors weitgehend automatisieren und damit preisgünstig gestalten.

Die Mikrofonanordnung kann durch ein Differenzmikrofon oder durch zwei Mikrofone in Differenzschaltung gebildet sein. Ein in der DE-A-40 18 393 beschriebener photoakustischer Gassensor mit einem Differenzmikrofon wird bisher kaum eingesetzt, weil praktisch keine günstigen Mikrofone verfügbar und übliche günstige Mikrofone für die typischen tiefen Signalfrequenzen nur sehr beschränkt geeignet sind. Aus diesem Grund werden zur Unterdrückung von Störschallquellen meistens zwei Mikrofone in elektrischer Differenzschaltung eingesetzt (siehe dazu EP-A-0 855 592). Dabei hat man aber das Problem, Mikrofone mit einer geeignet tiefen unteren Eckfrequenz zu finden, weil günstige Mikrofone aus Audioapplikationen eine typische untere 3dB-Frequenz bei 20 bis 30Hz, also im Bereich der Signalfrequenz des Gassensors, haben, was zu Streuungen der Eckfrequenz und Veränderungen von dieser durch Umwelteinflüsse und Alterung führt. Ausserdem ist die Differenzbildung schwierig, weil die Mikrofone auf Messgenauigkeit im Prozentbereich gepaart werden müssen. Das führt zusammen mit der erwähnten Drift der 3dB-Frequenz dazu, dass eine wirksame Störunterdrückung kaum realisierbar ist.

Eine erste bevorzugte Ausführungsform des erfindungsgemässen Gassensors ist dadurch gekennzeichnet, dass die Mikrofonanordnung ein Differenzmikrofon aufweist, welches durch ein so genanntes Noise Cancelling Mikrofon der in Mobiltelefonen verwendeten Art gebildet ist.

Das Noise Cancelling Differenzmikrofon merzt auch im Verhältnis zum Nutzsignal relativ grosse Störungen an der Quelle aus und unterstützt dadurch den geringen Energieverbrauch. Das Differenzmikrofon ist ausserordentlich kostengünstig und in unterschiedlichen miniaturisierten Bauformen erhältlich.

Weitere bevorzugte Ausführungsformen und vorteilhafte Weiterentwicklungen des erfindungsgemässen Photoakustischen Gassensors sind in den abhängigen Ansprüchen 3 bis 10 beansprucht.

Die Erfindung betrifft weiter ein Verfahren zur Herstellung des genannten photoakustischen Gassensors. Dieses ist dadurch gekennzeichnet, dass der auf der Strahler-Leiterplatte gefertigte Strahler, die auf der Mikrofon-Leiterplatte gefertigte Mikrofonanordnung sowie die Mess- und die Referenzzelle in einer Batchverarbeitung zu einem Messmodul vormontiert werden, welches auf der Modul-Leiterplatte bestückt wird.

Eine erste bevorzugte Ausführungsform des erfindungsgemässen Verfahrens ist dadurch gekennzeichnet, dass die Vormontage des Messmoduls durch loses Stapeln oder durch Kleben erfolgt.

Eine zweite bevorzugte Ausführungsform ist dadurch gekennzeichnet, dass die Montage der Membranen für den Gaseinlass in die Mess- und die Referenzzelle am Messmodul erfolgt.

Im Folgenden wird die Erfindung anhand eines Ausführungsbeispiels und der Zeichnungen näher erläutert; es zeigt:
Fig. 1 eine Explosionsdarstellung eines erfindungsgemässen photoakustischen Gassensors,
Fig. 2 ein Detail des Gassensors von Fig. 1;
Fig. 3 eine erste schematische Skizze zur Erläuterung der Herstellung des Gassensors,
Fig. 4 eine zweite schematische Skizze zur Erläuterung der Herstellung des Gassensors,
Fig. 5 eine schematische Darstellung des Gassensors von Fig. 1,
Fig. 6 eine erste Variante des Gassensors von Fig. 5; und
Fig. 7 eine zweite Variante des Gassensors von Fig. 5.

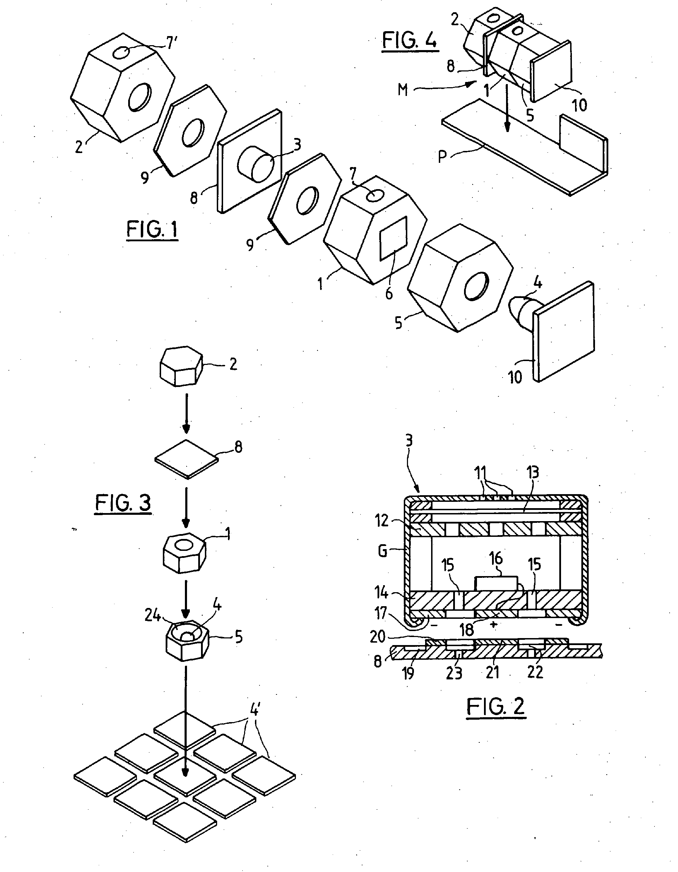

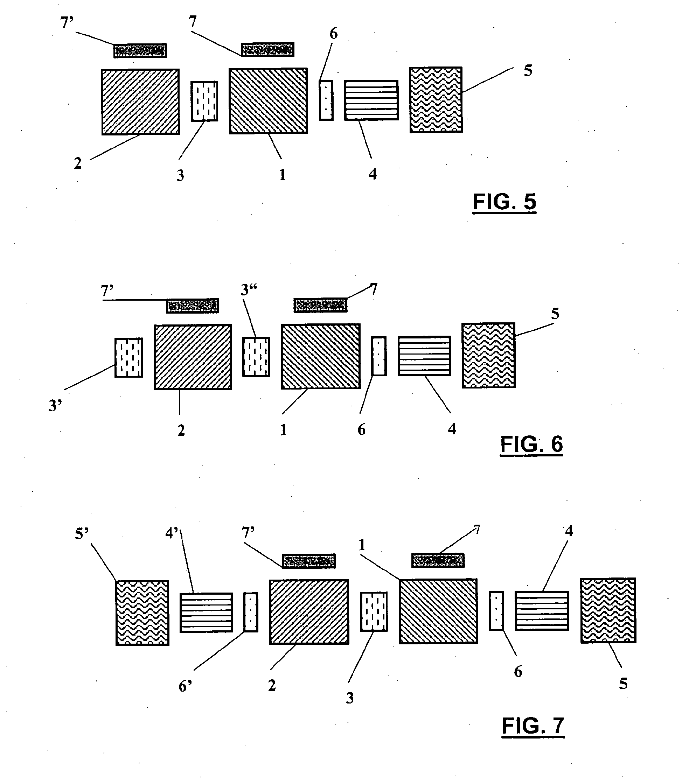

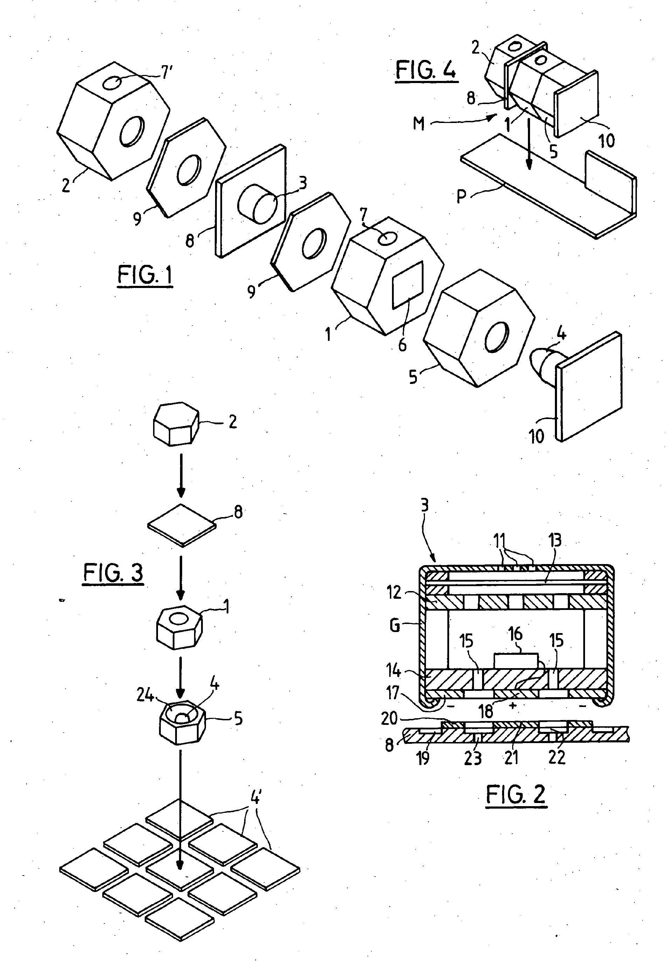

Der in Figur 1 dargestellte photoakustische Gassensor besteht aus einer Messzelle 1, einer Referenzzelle 2, einem zwischen den beiden Zellen 1 und 2 angeordneten bidirektionalen Differenzmikrofon 3, einer der Messzelle 1 zugeordneten Mikroglühlampe 4 und einem Reflektorgehäuse 5 mit einem Reflektor zur Bündelung der von der Mikroglühlampe 4 ausgesandten Strahlung auf ein in der der Mikroglühlampe 4 zugewandten Seitenwand der Messzelle 1 angeordnetes Fenster, in welches ein Infrarot-Bandpassfilter 6 eingesetzt ist. Messzelle 1 und Referenzzelle 2 sind bezüglich Aufbau und Dimensionen absolut identisch. Sowohl die Messzelle 1 als auch die Referenzzelle 2 sind an einer äusseren Seitenwand mit einem Fenster versehen, in welches eine gaspermeable Membran 7 beziehungsweise 7' eingesetzt ist. Das Differenzmikrofon 3 ist auf einem Print 8 montiert und zu beiden Seiten des Differenzmikrofons 3 ist je eine Dichtung 9 (optional) vorgesehen. Die Mikroglühlampe 4 ist ebenfalls auf einem Print montiert, der mit dem Bezugszeichen 10 bezeichnet ist.

Die Mikroglühlampe 4 emittiert Licht über ein breites Spektrum bis in den Infrarotbereich; in den meisten Fällen wird für die Gasdetektion eine Spektrallinie im Infrarotbereich verwendet. Das Infrarot-Bandpassfilter 6 hat einen für das zu detektierende Gas charakteristischen Durchlassbereich in Form eines schmalen Spektralbandes, welches für den Nachweis von CO₂ bei 4.25 µm, von NH₃ bei 10 µm und von CH₄ bei 3.4 µm liegt. Das nachzuweisende Gas gelangt durch die beiden gaspermeablen Membranen 7 und 7' in die Messzelle 1 beziehungsweise in die Referenzzelle 2. Das in der Messzelle 1 anwesende Gas wird durch moduliertes Licht der Mikroglühlampe 4 bestrahlt. Das Gas absorbiert die Lichtstrahlung und erwärmt sich dadurch. Daraus entsteht eine thermische Ausdehnung und, entsprechend der Modulation der Lichtstrahlung, eine periodische Druckschwankung, so dass eine akustische Druckwelle verursacht wird, deren Stärke in direktem Verhältnis zur Konzentration des Gases steht.

Der Störschall, der von aussen auf die Membranen 7, 7' trifft, wird durch diese abgeschwächt in der Messzelle 1 und der Referenzzelle 2 je mit identischer Stärke auftreten. Dieser Störschall kompensiert sich somit direkt an der Membran des Mikrofons 3, ohne dass grosse Signale entstehen, die elektronisch subtrahiert werden müssten. Da zu beiden Seiten der Mikrofonmembran die selben Druckschwankungen herrschen, findet an dieser eine direkte physikalische Subtraktion der durch Störschall verursachten. Signale statt, so dass die Mikrofonmembran gar nicht erst ausgelenkt wird. Die Mikrofonmembran liefert somit unmittelbar den durch das Gas in der Messzelle 1 verursachten akustischen Druck und damit die gesuchte Konzentration.

Das Mikrofon 3 ist ein so genanntes "Noise Cancelling" Mikrofon, wie es in Mobiltelefonen Anwendung findet. Wenn diese Mikrofon, die im Freien einen völlig unbrauchbaren Frequenzgang aufweisen, als Differenzmikrofone verwendet und zwischen zwei akustisch praktisch geschlossenen Zellen, nämlich zwischen Messzelle 1 und Referenzzelle 2, eingebaut werden, zeigen sie sehr gute, auf die Aufgabenstellung zugeschnittene Eigenschaften.

In Fig. 2 ist das Mikrofon 3 im Schnitt dargestellt. Dieses besteht darstellungsgemäss aus einem einseitig offenen Gehäuse G von der Form einer Dose, deren Boden die Vorderseite des Mikrofons bildet. In diesem Boden sind Bohrungen 11 für den Schalldurchtritt zur der zwischen dem Boden des Gehäuses G und einer Metall-Backelektrode 12 eingespannten Mikrofonmembran 13 aus metallisiertem Kunststoff vorgesehen. Die Seitenwand des Gehäuses G ist an der Rückseite des Mikrofons umgebördelt und fixiert eine Rückwand 14, die mit kleinen Ausgleichsbohrungen, so genannten Back Ports 15 versehen ist und an ihrer der Metall-Backelektrode 12 zugewandten Innenseite einen FET 16 und an ihrer Aussenseite zwei Kreiselektroden 17 und 19 trägt.

Die Back Ports 15 sind für tiefe Frequenzen genügend gross und machen den Frequenzgang des Mikrofons 3 bis zur unteren Eckfrequenz flach. Diese untere Eckfrequenz ist durch die Kapazität der Membran 13 und den Eingangswiderstand des verwendeten Impedanzwandlers bestimmt und liegt deutlich unter 10Hz , vorzugsweise zwischen 1 und 4Hz, so dass das Signal bei der Nutzfrequenz von etwa 20 bis 30Hz von der unteren Eckfrequenz nur unwesentlich beeinflusst wird.

Das Mikrofon 3 ist auf dem Print 8 befestigt, welcher eine Ringnut 19 für die Positionierung der Bördelung des Mikrofons 3, ringförmige Kontaktstege 20 und 21 für die beiden Kreiselektroden 17 beziehungsweise 18, sowie eine Ringnut 22 mit einigen vom Grund der Ringnut durch den Print 8 geführten Bohrungen 23 aufweist. Die Bohrungen 23 und die Ringnut 22 ermöglichen die Zufuhr von Luft und Schall von hinten zu den Back Ports 15, ohne dass diese auf irgendwelche Bohrungen im Print 8 ausgerichtet werden müssen.

Das Mikrofon 3 und der Print 8 brauchen beim Bestücken nicht ausgerichtet zu werden, was eine leichte Montage mit einem Roboter ermöglicht. Die Montage wird noch durch die Ringnut 19 erleichtert, die das Mikrofon 3 mit seiner Gehäusebördelung beim Platzieren automatisch in die richtige Position führt. Die Kreiselektroden 17 und 18 werden mit der Leiterplatte 17 mit Leitepoxy verklebt und elektrisch verbunden. Die Aussenkontur von Messzelle 1, Referenzzelle 2 und des Reflektorgehäuse 5 ist durchgehend gleichbleibend, so dass sich die Teile als Strangprofile kostengünstig ziehen lassen und die notwendige Bearbeitung auf ein Minimum reduziert wird.

Im Rahmen des Herstellungsprozess des Gassensors erfolgt die Fertigung/Bereitstellung der einzelnen Komponenten des Sensors, d.h. des Reflektors mit seinem Gehäuse 5, der beiden Zellkörper für Messzelle 1 und Referenzzelle 2, des Bandpassfilters 6, des Mikrofons 3 und der Mikroglühlampe 4. Das Bandpassfilter 6 wird in die Messzelle 1 eingeklebt und dann wird das Mikrofon 3 auf dem Print 8 montiert. Messzelle 1 und Referenzzelle 2 bestehen vorzugsweise aus Aluminium.

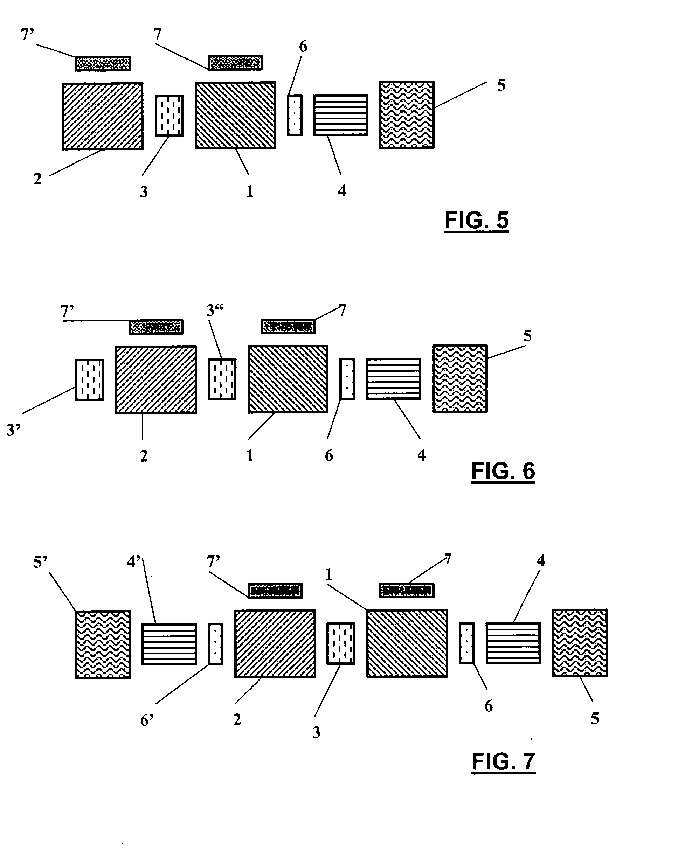

Anschliessend werden diese Komponenten zu einem aus Fig. 4 ersichtlichen Messmodul M zusammen gesetzt, was durch die in Fig. 3 dargestellte Batchverarbeitung erfolgt. Es wird jeweils eine Referenzzelle 2 mit dem bestückten Mikrofon-Print 8, der Messzelle 1, dem den Reflektor 24 enthaltenden Reflektorgehäuse 5, in welches die Mikroglühlampe 4 eingesetzt ist, und dem bestückten Mikroglühlampen-Print 10 zu einem Stapel verbunden, was entweder durch Kleben oder durch Zusammenspannen erfolgt. Im ersten Fall sind die Dichtungen 9 (Fig. 1) nicht erforderlich, weil durch die Klebeverbindung das Innere der Zellkörper 1 und 2 abgedichtet wird. Das Zusammenspannen erfolgt mit Hilfe eines federnden Organs in der Art einer Klammer oder durch andere Verbindungselemente. Beispielsweise können an den Zellenteilen Verbindungsstifte auf der einen Seite in passende Bohrungen der anderen Zellhälfte kalt verpresst werden. Eine weitere Möglichkeit sind Kerbnägel die durch eine Zelle (z.B. Referenzzelle 2) hindurch in passende Bohrungen der anderen Zelle verpresst werden.

In die Messzelle 1 und die Referenzzelle 2 des fertigen Messmoduls M werden anschliessend die Membranen 7, 7' eingesetzt und schliesslich wird das Messmodul M auf einen Modulprint P bestückt, was durch Kleben oder Löten erfolgen kann. Das vormontierte Messmodul M ist komplett und funktionsfähig und kann vorab als Einheit geprüft werden, bevor es auf dem Modulprint P bestückt wird. Das Messmodul M kann auf beliebigen anderen Leiterplatten wie ein Bauteil als Sub-Modul eingefügt werden, wobei für das Mikrofon 3, den Reflektor 24 und die Mikroglühlampe 4 keine Toleranz- oder Ausrichtprobleme entstehen.

Es ist offensichtlich, dass die beschriebene Herstellung des Sensors wesentlich einfacher und kostengünstiger ist als die bisher bekannten Herstellverfahren, bei denen das Mikrofon und die Mikroglühlampe auf einer Basisleiterplatte montiert und anschliessend die Messzelle um diese Komponenten herum einzeln aufgebaut wird.

Fig. 5 zeigt eine schematische Blockbilddarstellung des Photoakustischen Gassensors von Fig. 1 mit Messzelle 1, Referenzzelle 2, Mikrofon 3, Mikroglühlampe (Strahler) 4, Reflektorgehäuse 5, Bandpassfilter 6 und Membranen 7, 7'; die Figuren 6 und 7 zeigen Varianten des in Fig. 5 dar-gestellten Gassensors.

Bei der in Fig. 6 dargestellten Variante werden anstatt des Noise Cancelling Mikrofons 3 zwei Standardmikrofone 3' und 3" verwendet, wobei die Differenzbildung in der Sensorelektronik erfolgt. Die in Fig. 7 dargestellten Variante bietet die Möglichkeit, in der Referenzzelle 2 eine zweite Gaskomponente zu erfassen. Zu diesem Zweck ist ein der Referenzzelle 2 zugeordneter und in einem zweiten Reflektorgehäuse 5' angeordneter zweiter Strahler 4' vorgesehen, und die Referenzzelle ist an ihrer dem zweiten Strahler 4' zugewandten Seitenwand mit einem Bandpassfilter 6' versehen. Zusätzlich zu CO₂ könnten als zweite Gaskomponente beispielsweise Wasserdampf oder Kohlenwasserstoffe detektiert werden.

## Patentansprüche

1. Photoakustischer Gassensor mit einer Mess- und einer Referenzzelle (1 bzw. 2), einem eine Lichtquelle (4) aufweisenden Strahler und einer Mikrofonanordnung für die Messung der Druckdifferenz zwischen Mess- und Referenzzelle (1 bzw. 2), **dadurch gekennzeichnet, dass** die Mikrofonanordnung und die Lichtquelle (4) auf einer Mikrofon- beziehungsweise Lampen-Leiterplatte (8 bzw. 10) gefertigt und zusammen mit der Mess- und der Referenzzelle (1 bzw. 2) auf einer gemeinsamen Modul-Leiterplatte (P) bestückt sind.

2. Photoakustischer Gassensor nach Anspruch 1, **dadurch gekennzeichnet, dass** die Mikrofonanordnung ein Differenzmikrofon (3) aufweist, welches durch ein so genanntes Noise Cancelling Mikrofon der in Mobiltelefonen verwendeten Art gebildet ist.

3. Photoakustischer Gassensor nach Anspruch 2, **dadurch gekennzeichnet, dass** der Innenraum der Messzelle (1) und der Referenzzelle (2) zur Mikrofon-Leiterplatte (8) hin abgedichtet ist.

4. Photoakustischer Gassensor nach Anspruch 3, **dadurch gekennzeichnet, dass** die Abdichtung des Innenraums der Mess- und der Referenzzelle (1 bzw. 2) durch Verkleben der Mess- und der Referenzzelle (1 bzw. 2) mit der genannten Leiterplatte (8) erfolgt.

5. Photoakustischer Gassensor nach Anspruch 3, **dadurch gekennzeichnet, dass** die Abdichtung des Innenraums der Mess- und der Referenzzelle (1 bzw. 2) durch je eine zwischen der bettreffenden Zelle und der Mikrofon-Leiterplatte (8) angeordnete Dichtung (9) erfolgt, und dass ein die Mess- und die Referenzzelle (1 bzw. 2) verbindende Justiermittel vorgesehen sind.

6. Photoakustischer Gassensor nach Anspruch 5, **dadurch gekennzeichnet, dass** das Justiermittel durch ein Klemmorgan in der Art einer elastischen Klammer gebildet ist.

7. Photoakustischer Gassensor nach Anspruch 5, **dadurch gekennzeichnet, dass** das Justiermittel durch an einer der beiden Zellen vorgesehene Verbindungsorgane und diesen in der anderen Zelle zugeordnete Bohrungen gebildet ist.

8. Photoakustischer Gassensor nach Anspruch 7, **dadurch gekennzeichnet, dass** die Verbindungsorgane durch Verbindungsstifte oder Kerbnägel gebildet sind, die in die Bohrungen verpresst werden.

9. Photoakustischer Gassensor nach einem der Ansprüche 1 bis 8, **dadurch gekennzeichnet, dass** die Lichtquelle (4) im Bereich der Sensorlängsachse angeordnet ist, und dass die Messzelle (1) und die Referenzzelle (2) je eine durch eine feinporige Membran (7 bzw. 7') für den Gaseinlass abgedichtete seitliche Öffnung aufweisen.

10. Photoakustischer Gassensor nach einem der Ansprüche 1 bis 4, **dadurch gekennzeichnet, dass** der Strahler einen in einem Reflektorgehäuse (5) vorgesehenen Reflektor (24) umfasst, und dass die Messzelle (1), die Referenzzelle (2) und das Reflektorgehäuse (5) gleiche Aussenkonturen aufweisen.

11. Verfahren zur Herstellung des Photoakustischen Gassensors nach einem der voranstehenden Ansprüche, **dadurch gekennzeichnet, dass** die auf der Lampen-Leiterplatte (10) gefertigte Lichtquelle (4), die auf der Mikrofon-Leiterplatte (8) gefertigte Mikrofonanordnung sowie die Mess- und die Referenzzelle (1 bzw. 2) in einer Batchverarbeitung zu einem Messmodul (M) vormontiert werden, welches auf der Modul-Leiterplatte (P) bestückt wird.

12. Verfahren nach Anspruch 11, **dadurch gekennzeichnet, dass** die Vormontage des Messmoduls (M) durch loses Stapeln oder durch Kleben erfolgt.

13. Verfahren nach den Ansprüchen 9 und 12, **dadurch gekennzeichnet, dass** die Montage der Membranen (7, 7') für den Gaseinlass in die Mess- und die Referenzzelle (2 bzw. 2) am Messmodul (M) erfolgt.
